# EUROPÄISCHE PATENTSCHRIFT

(11) **EP 1 338 772 B1**
(45) Veröffentlichungstag und Bekanntmachung des Hinweises auf die Patenterteilung: **08.08.2007**
(21) Anmeldenummer: 03100331.2
(22) Anmeldetag: 13.02.2003
(51) Int. Cl.: F02M 35/116, F02M 35/10, F02B 27/02, F02B 75/22

(54) **Brennkraftmaschine**
Internal combustion engine
Moteur à combustion interne

(30) Priorität: 22.02.2002 DE 10207444
(43) Veröffentlichungstag der Anmeldung: 27.08.2003
(73) Patentinhaber: Mann + Hummel GmbH, 71638 Ludwigsburg (DE)
(72) Erfinder: Spannbauer, Helmut, 71696, Möglingen (DE)

(56) Entgegenhaltungen:
- EP-A- 0 200 930
- EP-A- 0 265 960
- DE-A1- 4 032 321
- US-A- 5 125 369
- PATENT ABSTRACTS OF JAPAN Bd. 018, Nr. 076 (M-1556), 8. Februar 1994 (1994-02-08) & JP 05 288061 A (FUJI HEAVY IND LTD), 2. November 1993 (1993-11-02)

## Beschreibung

Die Erfindung betrifft eine Brennkraftmaschine mit den Merkmalen nach dem Oberbegriff des Anspruchs 1.

Brennkraftmaschinen insbesondere im Personenwagen-Kraftfahrzeugbau müssen hohe Anforderungen hinsichtlich der Laufkultur erfüllen. Leistungsstärkere Brennkraftmaschinen weisen häufig sechs oder mehr Zylinder auf, wodurch konstruktionsbedingt ein ruhiger, komfortabler Motorlauf mit geringem Vibrationsniveau und relativ geringem Geräuschpegel erzielbar ist. Ein wesentlicher Anteil des im Betrieb entstehenden Geräuschpegels wird durch das Ansauggeräusch der Verbrennungsluft in der Sauganlage der Brennkraftmaschine erzeugt.

Bei einer Bauweise der Brennkraftmaschine beispielsweise als V- oder Boxer-Motor sind die Zylinder in zwei zueinander beabstandeten Zylinderbänken angeordnet. Dabei wird den einzelnen, auf die beiden Zylinderbänke verteilten Zylindern frische Verbrennungsluft mittels eines zentralen Sammlers in der Sauganlage zugeführt. Der zentrale Sammler ist großvolumig und insbesondere unter Berücksichtigung weiterer Anbauteile nur mit Schwierigkeiten im zur Verfügung stehenden, eingeschränkten Bauraum unterzubringen. Bei einer Ausbildung der Brennkraftmaschine mit je einem Lader für eine Zylinderbank zur Verdichtung der Verbrennungsluft kann eine nachteilige gegenseitige Beeinflussung der beiden Lader über den druckseitig angeschlossenen Sammler nicht ausgeschlossen werden. Für einen geringen Ansauggeräuschpegel ist eine insgesamt großvolumige Sauganlage mit groß ausgebildetem Sammler, Luftfilter und dgl. erforderlich.

Das Dokument EP 0 265 960 A2 offenbart ein Ansaugsystem für eine Mehrzylinder-Brennkraftmaschine. Die Zylinder sind in Zylindergruppen auf zwei Zylinderbänken verteilt angeordnet. Die Zylindergruppen sind über Zweigleitungen mit einer gemeinsamen Ansaugleitung, welche zur Atmosphäre hin offen ist, verbunden. Die Zweigleitungen sind mit ihrem, von der Ansaugleitung beabstandeten Ende zu einer Ringleitung geschlossen. Hierbei sind Ventile vorgesehen, um die Länge der Ringleitung an den Betriebszustand der Brennkraftmaschine anzupassen. In der Ansaugleitung ist ein gemeinsamer Luftfilter und ein gemeinsamer Sammler angeordnet, wobei diese Teile entsprechend groß dimensioniert sind.

Der Erfindung liegt die Aufgabe zugrunde, eine gattungsgemäße Brennkraftmaschine derart weiterzubilden, daß bei geringem Bauvolumen ein verbessertes Betriebsverhalten erzielt ist.

Die Aufgabe wird durch eine Brennkraftmaschine mit den Merkmalen des Anspruchs 1 gelöst.

Dazu wird vorgeschlagen, bei einer Brennkraftmaschine mit mindestens sechs auf zwei Zylinderbänke verteilten Zylindern für jede Zylinderbank ein eigenes Motorsaugrohr mit einem zylinderseitigen Sammler vorzusehen, wobei die beiden Motorsaugrohre mittels eines Querkanals luftdruckübertragend miteinander verbunden sind. Durch die Ausbildung zweier getrennter Sammler können diese jeder für sich verhältnismäßig klein ausgebildet sein und einfach auch in räumlich beengten Verhältnissen angeordnet werden. Da durch jeden einzelnen Sammler nur die Hälfte der Zylinder mit Verbrennungsluft versorgt wird, können Füllungsnachteile einzelner Zylinder vermieden werden. Auch die Luftfilter der einzelnen Motorsaugrohre können ohne nachteiligen Einfluß auf das Ansauggeräuschverhalten relativ klein und damit platz- und kostensparend ausgebildet sein. Durch den Querkanal zur luftdruckübertragenden Verbindung der beiden Motorsaugrohre wird die Pulsationsstärke des Gesamtansaugluftstromes und damit das Ansauggeräusch verringert. Auch ist eine Verringerung des Durchflußwiderstandes und damit eine Leistungsverbesserung erzielbar. Die vorgeschlagene Anordnung ist insbesondere bei V-Motoren sowie bei Boxer-Motoren mit entsprechend großem Abstand der Zylinderbänke zweckmäßig. Ein aufwendiger zentraler Sammler zur Versorgung der weit beabstandeten Zylinderbänke mit Verbrennungsluft ist vermieden.

Bei einer Viertakt-Brennkraftmaschine dauert der Ansaugtakt eines einzelnen Zylinders etwa eine halbe Kurbelwellenumdrehung. Durch die etwa sinusförmig verlaufende Kolbengeschwindigkeit während des Ansaugtaktes wird ein entsprechend pulsierender Ansaugluftstrom erzeugt. Bei insgesamt sechs oder mehr Zylindern überlappen sich die Ansaugphasen der einzelnen Zylinder. Mit steigender Anzahl von Zylindern ist der Überlappungsbereich weiter ausgeprägt, wodurch sich die Pulsationsstärke des Ansaugluftstromes und damit der Geräuschpegel verringert. Bei sechs- bzw. achtzylindrigen Motoren mit drei bzw. vier Zylindern pro Zylinderbank wird die beschriebene Überlappung mittels des Querkanals hergestellt. Bei einem Zwölf-Zylinder-Motor mit zwei sechszylindrigen Zylinderbänken ist in jedem der beiden Motorsaugrohre für sich bereits eine geräuscharme Überlappung der Ansaugtakte mit entsprechend geringer Pulsationsstärke gegeben. Mittels des Querkanales ist eine weitere Absenkung der Pulsationsstärke ermöglicht.

In einer zweckmäßigen Weiterbildung ist der Querkanal stromab des Luftfilters auf dessen Reinluftseite in der Sauganlage angeordnet. Stromauf des Querkanals weist der Ansaugluftstrom in beiden Motorsaugrohren eine geringe Pulsationsstärke auf. Dadurch kann das Volumen des Luftfilters ohne nachteiligen Einfluß auf das Ansauggeräusch vergleichsweise klein gehalten sein. Bei einer Anordnung von je einem Lader zur Verdichtung der Verbrennungsluft in beiden Motorsaugrohren hat sich eine Anordnung des Querkanals als zweckmäßig herausgestellt, bei der dieser beidseitig in die Motorsaugrohre zwischen dem jeweiligen Lader und dem Luftfilter mündet. Einerseits sind dadurch die Luftfilter mit geringen Ansaugdruckschwankungen beaufschlagt, andererseits ist eine nachteilige gegenseitige Beeinflussung der Lader durch das Fehlen einer hochdruckseitigen Verbindung vermieden.

Eine besonders gute akustische Wirkung ergibt sich bei einer möglichst motornahen Anordnung des Querkanales. Insbesondere kann eine Verbindung der beiden in die Zylinder mündenden Sammler mittels des Querkanales zweckmäßig sein.

In einer vorteilhaften Weiterbildung ist die Luftdruckübertragung im Querkanal mittels eines im Querkanal angeordneten Begrenzungsgliedes eingestellt. Durch das Begrenzungsglied beispielsweise in Form einer Blende kann das akustische Verhalten der Brennkraftmaschine den gewünschten Erfordernissen angepaßt werden. Bei einer Ausbildung des Begrenzungsgliedes in Form einer Klappe kann das akustische Verhalten auch während des Betriebes eingestellt und damit den jeweiligen Erfordernissen angepaßt werden. Bei einer selbsttätigen Einstellung des Begrenzungsgliedes abhängig von Betriebsparametern der Brennkraftmaschine und insbesondere abhängig von der Drehzahl ergeben sich erweiterte Möglichkeiten der Anpassung der Sauganlage hinsichtlich Akustik und Leistung. Das Einhalten insbesondere gesetzlicher Vorschriften beispielsweise für den Fall der "beschleunigten Vorbeifahrt" ist erleichtert. Die Abstimmung des akustischen Verhaltens der Sauganlage kann auch mittels eines im Querkanal angeordneten Dämpfungsmaterials erfolgen oder unterstützt werden.

Es kann auch eine manuelle Betätigung des Begrenzungsgliedes zweckmäßig sein. Beispielsweise bei Kraftfahrzeugen mit einer Umschaltmöglichkeit zwischen einem sportlichen und einem komfortablen Betriebsmodus kann auch das Begrenzungsglied im Querkanal mit der Betätigungseinrichtung gekoppelt sein. Am Beispiel eines Zwölf-Zylinder-Motors stellt sich dabei im Reisemodus und bei geöffnetem Begrenzungsglied ein geräuscharmer Ansaugschallpegel mit der geringen Pulsationsstärke des Zwölf-Zylinder-Motors ein. Im sportlichen Betriebsmodus bei gleichzeitig geschlossenem Begrenzungsglied im Querkanal stellt sich in den Motorsaugrohren eine sechs Zylindern entsprechende Pulsationsstärke ein. Das Ansauggeräusch des Zwölf-Zylinder-Motors entspricht damit dem zweier Sechs-Zylinder-Motoren und hat damit einen sportlicheren Klang.

Ausführungsbeispiele der Erfindung werden im Folgenden anhand der Zeichnung näher beschrieben. Es zeigen:
- Fig. 1: in schematischer Darstellung einen Zwölfzylinder-V-Motor mit zwei getrennten Motorsaugrohren und je einem Turbolader pro Zylinderbank und einem zwischen den jeweiligen Ladern und Luftfiltern in die beiden Motorsaugrohre mündenden Querkanal;
- Fig. 2: eine Variante der Anordnung nach Fig. 1 mit einem in die beiden Sammler der beiden Zylinderbänke mündenden Querkanal und einem als Blende ausgebildeten Begrenzungsglied;
- Fig. 3: in Diagrammform das Pulsationsverhalten des Ansaugluftstromes bei zwei Zylinderbänken mit jeweils vier Zylindern;
- Fig. 4: die Diagrammdarstellung nach Fig. 3 bei jeweils sechs Zylindern pro Zylinderbank.

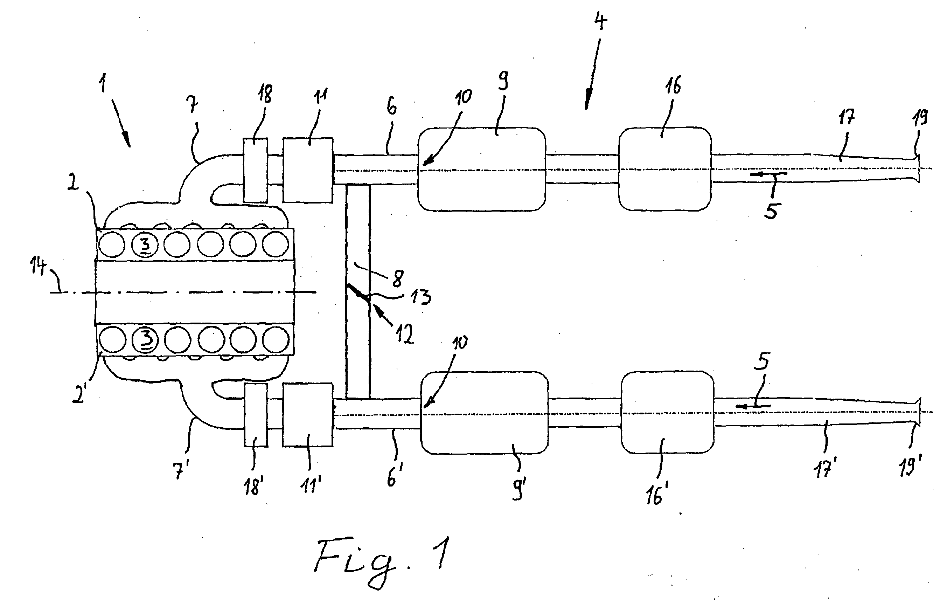

Die schematische Darstellung nach Fig. 1 zeigt eine angedeutete Brennkraftmaschine 1 mit insgesamt zwölf Zylindern 3, wobei jeweils sechs Zylinder 3 in zwei V-förmig zueinander stehenden Zylinderbänken 2, 2' angeordnet sind. Die Brennkraftmaschine 1 ist damit als V12-Motor ausgebildet. Es kann auch ein V6-, V8- bzw. ein entsprechender Boxer-Motor vorgesehen sein. Über nicht dargestellte, in den Zylinder 3 laufende Kolben ist eine ebenfalls nicht dargestellte Kurbelwelle um eine Kurbelwellendrehachse 14 drehend antreibbar.

Zur Versorgung der Zylinder 3 mit Verbrennungsluft 5 ist eine Sauganlage 4 vorgesehen, die zwei getrennte Motorsaugrohre 6, 6' umfaßt. Die beiden Motorsaugrohre 6, 6' sind jeweils einer Zylinderbank 2, 2' zugeordnet, wobei die beiden Motorsaugrohre 6, 6' mittels eines Querkanals 8 luftdruckübertragend miteinander verbunden sind.

Die beiden Motorsaugrohre 6, 6' umfassen je eine lange Rohluftleitung 17, 17', an deren motorabgewandten Enden Diffusoren 19, 19' vorgesehen sind. In den Motorsaugrohren 6, 6' ist stromab der Rohluftleitungen 17 je ein Vorvolumen 16, 16' sowie ein Luftfilter 9, 9' nachgeschaltet. Die Vorvolumina 16, 16' können als Nebenschluß- oder Reihenschluß-Resonatoren ausgebildet sein. Die Motorsaugrohre 6, 6' münden mittels zylinderseitigen Sammlern 7, 7' in die jeweiligen Zylinder 3 der zugeordneten Zylinderbänke 2, 2'. In den Motorsaugrohren 6, 6' ist des weiteren jeweils ein Lader 11, 11' zur Verdichtung der Verbrennungsluft 5 und jeweils ein nachgeschalteter Ladeluftkühler 18, 18' vorgesehen. Die Lader 11, 11' sind im gezeigten Ausführungsbeispiel als Abgasturbolader ausgebildet. Es können auch Kompressoren, Rootslader oder andere geeignete Lader vorgesehen sein. An Stelle der beiden Luftfilter 9, 9' kann auch für beide Motorsaugrohre 6, 6' ein gemeinsamer Luftfilter 9 zweckmäßig sein. Die Länge der Motorsaugrohre 6, 6' mit den Rohluftleitungen 17, 17' sowie die Volumina der Luftfilter 9, 9' bzw. der Vorvolumina 16, 16' sind zur Dämpfung des Ansauggeräuschpegels abgestimmt.

Der Querkanal 8 ist stromab der beiden Luftfilter 9, 9' auf deren Reinluftseite 10 angeordnet und mündet in die beiden Motorsaugrohre 6, 6' zwischen dem jeweiligen Lader 11, 11' und dem jeweiligen Luftfilter 9, 9'. Etwa mittig im Querkanal 8 ist ein Begrenzungsglied 12 vorgesehen, welches im gezeigten Ausführungsbeispiel als schwenkbare Klappe 13 ausgebildet ist. Mittels der Klappe 13 ist die Luftdruckübertragung im Querkanal 8 zwischen den beiden Motorsaugrohren 6, 6' abhängig von der Drehzahl der Kurbelwelle einstellbar. Es kann auch eine selbsttätige Einstellbarkeit beispielsweise abhängig vom Motordrehmoment oder anderen Betriebsparametern zweckmäßig sein.

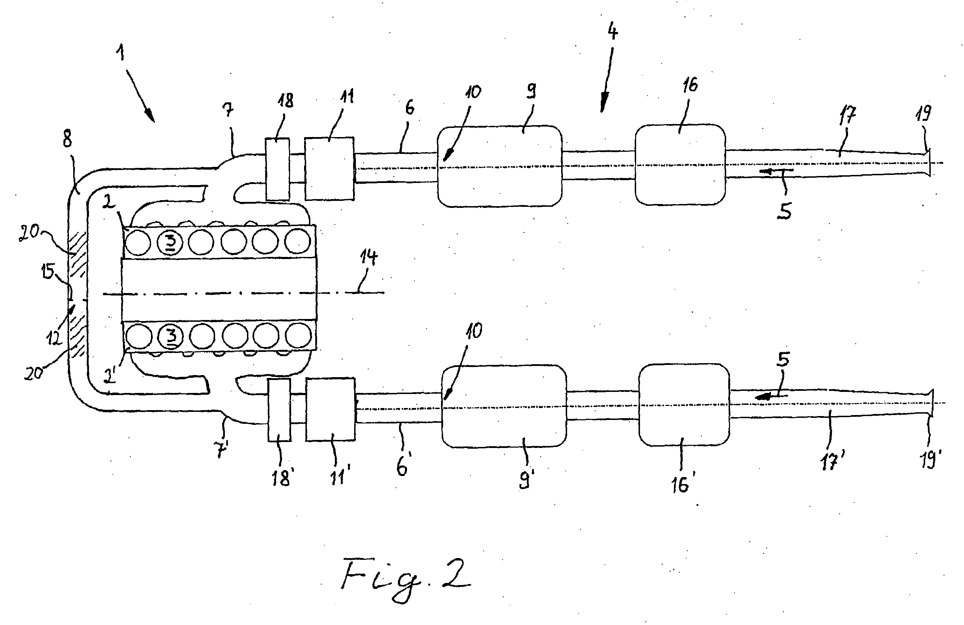

Fig. 2 zeigt eine Variante der Anordnung nach Fig. 1, bei der der Querkanal 8 mit seinen beiden Enden in die Sammler 7, 7' mündet. Das Begrenzungsglied 12 zur Einstellung der Luftdruckübertragung im Querkanal 8 ist im gezeigten Ausführungsbeispiel als angepaßte Austauschblende 15 ausgebildet. Es kann auch eine verstellbare Blende 15 oder ein anderes geeignetes Begrenzungsglied 12 vorgesehen sein. Des weiteren umfaßt das Begrenzungsglied ein beidseitig der Blende 15 im Querkanal 8 angeordnetes Dämpfungsmaterial 20. In den übrigen Merkmalen und Bezugszeichen stimmt das Ausführungsbeispiel nach Fig. 2 mit dem nach Fig. 1 überein.

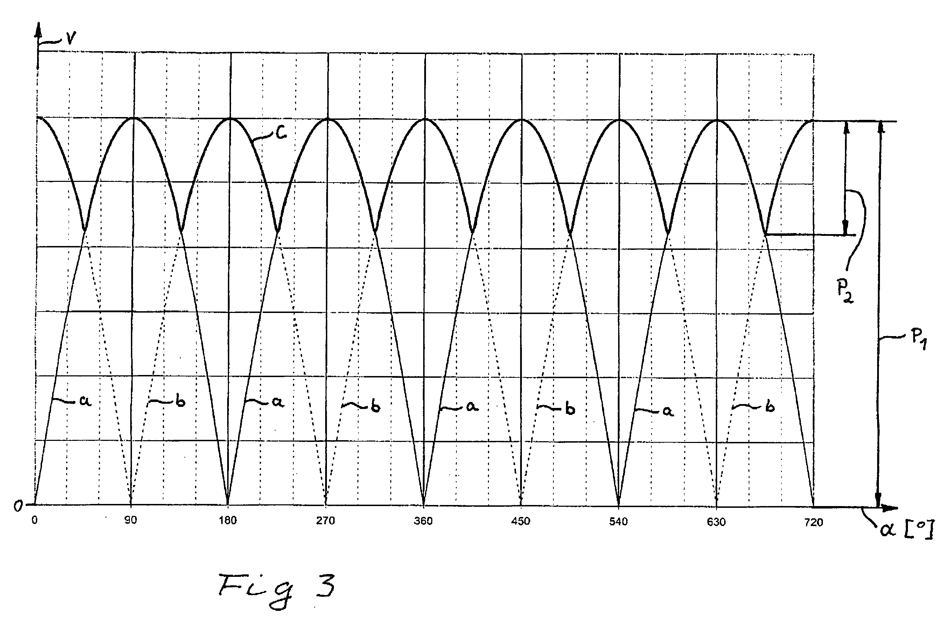

Fig. 3 zeigt in Diagrammform den Verlauf der Ansauggeschwindigkeit der Verbrennungsluft 5 (Fig. 1, 2) am Beispiel eines Achtzylinder-Motors mit zwei Zylinderbänken 2, 2'. Die Ansauggeschwindigkeit entspricht in erster Näherung der Kolbengeschwindigkeit in den Zylindern 3 (Fig. 1, 2). Die Ansauggeschwindigkeit v ist in Kurven a, b, c über einen Bereich des Drehwinkels α der Kurbelwelle um 720° entsprechend zwei Kurbelwellenumdrehungen dargestellt.

Die Kurve a zeigt näherungsweise den Verlauf der Ansauggeschwindigkeit v, der durch die Zylinder 3 der Zylinderbank 2 erzeugt wird. Die Werte der Kurve a liegen im Bereich zwischen etwa null und einem Maximalwert, woraus sich eine hohe Pulsationsstärke p₁ einer einzelnen vierzylindrigen Zylinderbank 2 ergibt. Entsprechend phasenversetzt ist der Verlauf der Ansauggeschwindigkeit v der weiteren Zylinderbank 2' in der Kurve b dargestellt und weist ebenfalls eine hohe Pulsationsstärke p₁ auf.

Die Einhüllende c beider Kurven ist als fett gezeichnete Linie dargestellt. Bei abgestimmter Luftdruckübertragung im Querkanal 8 (Fig. 1, 2) stellt sich in beiden Motorsaugrohren 6, 6' ein pulsierender Druckverlauf ein, der etwa der Einhüllenden c entspricht. Die Einhüllende c weist eine Pulsationsstärke p₂ auf, die deutlich geringer ist als die Pulsationsstärke p₁ zweier getrennter Motorsaugrohre 6, 6'. Durch Einstellung des Begrenzungsgliedes 12 bzw. der Klappe 13 (Fig. 1,2) ist die Pulsationsstärke p im Bereich zwischen p₁ und p₂ einstellbar. Dadurch ist das Motoransauggeräusch zwischen dem eines Achtzylinder-Motors und dem zweier einzelner Vierzylinder-Motoren anpaßbar.

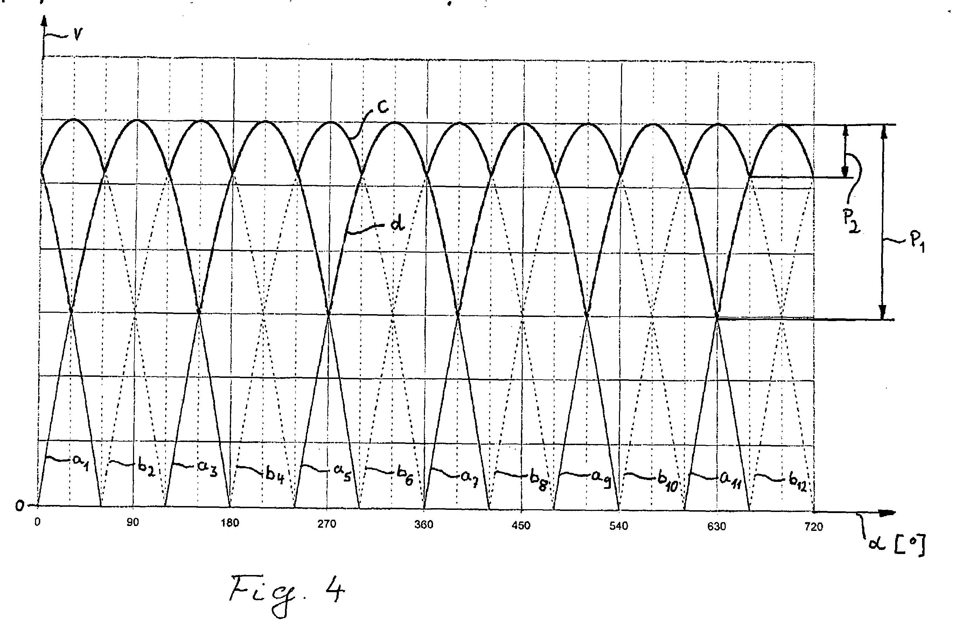

Fig. 4 zeigt die Diagrammdarstellung nach Fig. 3 am Beispiel eines V-Zwölf-Motors (Fig. 1, 2). Die beiden Kurven a, b entsprechend der beiden Zylinderbänke 2, 2' bzw. Motorsaugrohre 6, 6' weisen im Vergleich zur Darstellung nach Fig. 3 eine geringere Einzelpulsationsstärke p₁ auf, da sich einzelne Kurven a₁, a₃, a₅, a₇, a₉, a₁₁, bzw. b₂, b₄, b₆, b₈, b₁₀, b₁₂ der jeweiligen zusammengehörenden Zylinder 3 einer Zylinderbank 2, 2' gegenseitig überlappen. Über die Luftdruckübertragung im Querkanal 8 ergibt sich ein pulsierender Luftdruckverlauf in den beiden Motorsaugrohren 6, 6' (Fig. 1, 2) etwa entsprechend der Einhüllenden c der Einzelkurven. Die Pulsationsstärke p₂ der Einhüllenden c ist deutlich geringer als die Pulsationsstärke p₁ getrennter Motorsaugrohre 6, 6'. Insgesamt sind die Pulsationsstärken p₁, p₂ geringer als beim Achtzylinder-Motor (Fig. 3) oder Sechszylinder-Motor. In den übrigen Merkmalen und Bezugszeichen stimmt die Darstellung nach Fig. 4 mit derjenigen nach Fig. 3 überein.

## Patentansprüche

1. Brennkraftmaschine mit mindestens sechs auf zwei Zylinderbänke (2, 2') verteilten Zylindern (3) und mit einer Sauganlage (4) zur Versorgung der Zylinder (3) mit Verbrennungsluft (5),
**dadurch gekennzeichnet, daß** die Sauganlage (4) für jede Zylinderbank (2, 2') ein eigenes Motorsaugrohr (6, 6') mit einem zylinderseitigen Sammler (7, 7'), einer Rohluftleitung (17, 17') und an deren motorabgewandtem Ende einen Diffusor (19, 19') aufweist, wobei die beiden Motorsaugrohre (6, 6') mittels eines Querkanals (8) luftdruckübertragend miteinander verbunden sind.

2. Brennkraftmaschine nach Anspruch 1,
**dadurch gekennzeichnet, daß** die Sauganlage (4) mindestens einen Luftfilter (9) umfaßt, und daß der Querkanal (8) stromab des Luftfilters (9) auf dessen Reinluftseite (10) angeordnet ist.

3. Brennkraftmaschine nach Anspruch 2,
**dadurch gekennzeichnet, daß** in den beiden Motorsaugrohren (6, 6') je ein Lader (11, 11') vorgesehen ist, wobei der Querkanal (8) in die beiden Motorsaugrohre (6, 6') zwischen dem jeweiligen Lader (11, 11') und dem Luftfilter (9) mündet.

4. Brennkraftmaschine nach einem der Ansprüche 1 bis 3,
**dadurch gekennzeichnet, daß** die beiden Sammler (7, 7') mittels des Querkanals (8) verbunden sind.

5. Brennkraftmaschine nach einem der Ansprüche 1 bis 4,
**dadurch gekennzeichnet, daß** die Luftdruckübertragung im Querkanal (8) mittels einem im Querkanal (8) angeordneten Begrenzungsglied (12) eingestellt ist.

6. Brennkraftmaschine nach Anspruch 5,
**dadurch gekennzeichnet, daß** das Begrenzungsglied (12) einstellbar und insbesondere als verstellbare Klappe (13) ausgebildet ist.

7. Brennkraftmaschine nach Anspruch 6,
**dadurch gekennzeichnet, daß** das Begrenzungsglied (12) drehzahlabhängig betätigt ist.

8. Brennkraftmaschine nach Anspruch 5,
**dadurch gekennzeichnet, daß** das Begrenzungsglied (12) fest eingestellt und insbesondere als Blende (15) ausgebildet ist.

9. Brennkraftmaschine nach einem der Ansprüche 5 bis 8,
**dadurch gekennzeichnet, daß** das Begrenzungsglied (12) ein Dämpfungsmaterial (20) umfaßt.

10. Brennkraftmaschine nach einem der Ansprüche 1 bis 9,
**dadurch gekennzeichnet, daß** die Brennkraftmaschine (1) als V-Motor mit insbesondere zwölf Zylindern (3) ausgebildet ist.

## Claims

1. Internal combustion engine having at least six cylinders (3) distributed in two cylinder banks (2, 2') and an intake system (4) for supplying the cylinders (3) with combustion air, **characterised in that** the intake system (4) includes for each cylinder bank (2, 2') its own engine intake pipe (6, 6') with a collector (7, 7') on the cylinder side , an unfiltered air line (17, 17') and at its end remote from the engine a diffuser (19, 19'), wherein the two engine intake pipes (6, 6') are interconnected so as to transmit air pressure by means of a transverse duct (8).

2. Internal combustion engine according to claim 1, **characterised in that** the intake system (4) includes at least one air filter (9), and **in that** the transverse duct (8) is disposed downstream of the air filter (9) on the filtered air side (10) of the said air filter.

3. Internal combustion engine according to claim 2, **characterised in that** a supercharger (11, 11') is provided in each of the two engine intake pipes (6, 6'), wherein the transverse duct (8) opens out into the two engine intake pipes (6, 6') between the respective supercharger (11, 11') and the air filter (9).

4. Internal combustion engine according to one of claim 1 to 3, **characterised in that** the two collectors (7, 7') are connected by means of the transverse duct (8).

5. Internal combustion engine according to one of claims 1 to 4, **characterised in that** the air pressure transmission in the transverse duct (8) is set by means of a limiting member (12) that is disposed in the transverse duct (8).

6. Internal combustion engine according to claim 5, **characterised in that** the limiting member (12) is adjustable and more especially is in the form of an adjustable flap (13).

7. lnternal combustion engine according to claim 6, **characterised in that** the limiting member (12) is actuated in a speed-dependent manner.

8. Internal combustion engine according to claim 5, **characterised in that** the limiting member (12) is set in a fixed manner and more especially is in the form of a diaphragm (15).

9. Internal combustion engine according to one of claims 5 to 8, **characterised in that** the limiting member (12) includes a damping material (20).

10. Internal combustion engine according to one of claims 1 to 9, **characterised in that** the internal combustion engine (1) is in the form of a V engine with more especially twelve cylinders (3).

## Revendications

1. Moteur à combustion comportant au moins six cylindres (3) répartis entre deux bancs de cylindres (2, 2') et une installation d'admission (4) pour alimenter le cylindre (3) avec de l'air comburant (5),
**caractérisé en ce que**
l'installation d'admission (4) comporte une tubulure d'admission (6, 6') propre à chaque banc de cylindres (2, 2'), cette tubulure ayant un collecteur côté cylindres (7, 7'), une conduite d'air non filtré (17, 17') et à l'extrémité non tournée vers le moteur, un diffuseur (19, 19'),
les deux tubulures d'admission (6, 6') du moteur étant reliées par un canal transversal (8) transmettant la pression de l'air.

2. Moteur à combustion selon la revendication 1,
**caractérisé en ce que**
l'installation d'admission (4) ayant au moins un filtre à air (9) et le canal transversal (8) est prévu en aval du filtre à air (9) sur le côté de l'air filtré (10).

3. Moteur à combustion selon la revendication 2,
**caractérisé en ce que**
chacune des deux tubulures d'admission (6, 6') du moteur est équipée d'un dispositif de suralimentation (11, 11'), le canal transversal (8) débouchant dans les deux tubulures d'admission (6, 6') entre le dispositif de suralimentation (11, 11') respectif et le filtre à air (9).

4. Moteur à combustion selon l'une quelconque des revendications 1 à 3,
**caractérisé en ce que**
les deux collecteurs (7, 7') sont reliés par le canal transversal (8).

5. Moteur à combustion selon l'une quelconque des revendications 1 à 4,
**caractérisé en ce que**
la transmission de la pression de l'air dans le canal transversal (8) est réglée à l'aide d'un organe de limitation (12) installé dans le canal transversal (8).

6. Moteur à combustion selon la revendication 5,
**caractérisé en ce que**
l'organe de limitation (12) est réglable et est notamment constitué par un volet réglable (13).

7. Moteur à combustion selon la revendication 6,
**caractérisé en ce que**
l'organe de limitation (12) est actionné en fonction de la vitesse de rotation.

8. Moteur à combustion selon la revendication 5,
**caractérisé en ce que**
l'organe de limitation (12) est réglé de manière fixe et est notamment constitué comme diaphragme (15).

9. Moteur à combustion selon l'une quelconque des revendications 5 à 8,
**caractérisé en ce que**
l'organe de limitation (12) comprend une matière d'amortissement (20).

10. Moteur à combustion selon l'une quelconque des revendications 1 à 9,
**caractérisé en ce que**
le moteur à combustion (1) est un moteur en V avec notamment douze cylindres (3).
